# EUROPÄISCHE PATENTSCHRIFT

(11) **EP 3 753 419 B1**
(45) Veröffentlichungstag und Bekanntmachung des Hinweises auf die Patenterteilung: **13.08.2025**
(21) Anmeldenummer: 20180517.3
(22) Anmeldetag: 17.06.2020
(51) Int. Cl.: A23L 19/00, A23P 30/00, B02C 1/12, A23B 7/024

(54) **VERFAHREN UND VORRICHTUNG ZUM MAHLEN VON TIEFGEFRORENEM MAHLGUT**
METHOD AND DEVICE FOR GRINDING DEEP FROZEN MATERIAL
PROCÉDÉ ET DISPOSITIF DE BROYAGE D'UNE MATIÈRE À BROYER CONGELÉE

(30) Priorität: 17.06.2019 DE 102019116388
(43) Veröffentlichungstag der Anmeldung: 23.12.2020
(73) Patentinhaber: Maschinenbau Kaltenbach GmbH, 79395 Neuenburg-Zienken (DE)
(72) Erfinder: Günther, Markus, 79379 Müllheim (DE)
(74) Vertreter: Mertzlufft-Paufler, Cornelius

(56) Entgegenhaltungen:
- EP-A1- 0 470 891
- EP-A1- 1 987 725
- US-A- 4 687 672

## Beschreibung

Die Erfindung behandelt ein Verfahren und eine Vorrichtung zum Mahlen von tiefgefrorenem Mahlgut.

Die Druckschrift EP 0 511 176 A2 beschreibt ein Verfahren zum Zerkleinern von Haushaltsabfällen. Haushaltsabfälle beinhalten verschiedenste Materialien mit unterschiedlichen Festigkeiten. Dies stellt beim Zerkleinern ein Problem dar. Es wird daher vorgeschlagen, den Müll abzukühlen, insbesondere tiefzufrieren, um eine spröde Materialeigenschaft zu erhalten, und den spröden Müll zu mahlen.

Aus der US 2018 / 0 044 705 A1 ist ein ähnliches Tiefkühlverfahren zum Zerkleinern von Biomasse bekannt. Im Dokument EP 0 470 891 A1 wird ein Verfahren, sowie eine Vorrichtung zum Mahlen von tiefgefrorenen Früchten beschrieben. Wie im Dokument aufgezeigt, wird hier das tiefgefrorene Mahlgut in einem Förderschritt zu einem Mahlwerk gefördert, hierbei ist es wichtig, die Früchte in einem gefrorenen Zustand zu halten.

Tiefgefrorenes Mahlgut im Sinne der Erfindung kann sehr vielfältig vorkommen. Dies können beispielsweise Lebensmittel im weitesten Sinne sein, insbesondere Gemüse und Obst, das durch Mahlen zu Breien verarbeitet wird. Dabei können sortenreine Breie oder Mischungen aus mehreren Obst- und/oder Gemüsesorten hergestellt werden. Tiefgefrorenes Mahlgut kann auch vorliegen als Kräuter und/oder Salat, insbesondere Basilikum, Petersilie und/oder Rucola. Tiefgefrorenes Mahlgut kann auch Fleisch und/oder Fisch und/oder Meerestiere, beispielsweise Garnelen, sein. Tiefgefrorenes Mahlgut kann auch als Lebensmittelabfall vorliegen, beispielsweise als Fischreste und/oder Gräten. Diese können beim Filetieren als Abfall entstehen und dann - nach dem Mahlen - zu einer Fischpaste verarbeitet werden. Tiefgefrorenes Mahlgut kann auch als Abfall, beispielsweise in Form von Fleischresten und/oder Schalen, einer Verarbeitung von Garnelen oder Krabben vorliegen. Hier kann vorgesehen sein, Pasten als Brotaufstrich herzustellen. Tiefgefrorenes Mahlgut kann auch in Form von Bestandteilen von Nahrungsergänzungsmitteln vorliegen, beispielsweise als Cannabisblätter, die zu Saft als Nahrungsergänzungsmittel, als Zusatzstoff in Getränken oder als Natururmedikament verarbeitet werden sollen. Eine weitere Anwendung ist tiefgefrorenes Mahlgut für Zusatzstoffe, beispielsweise Kräuter oder Extrakte vorn Kräutern, in naturkosmetischen Produkten zu verwenden.

Im Stand der Technik ist es dazu üblich, das tiefgefrorene Mahlgut zunächst vollständig aufzutauen, insbesondere auf eine Raumtemperatur oder eine höhere Temperatur. Damit dieser Auftauvorgang möglichst schonend abläuft, kann er nicht durch sehr hohe Temperaturen beschleunigt werden und dauert dementsprechend lange. Darüber hinaus ist eine große Lagerkapazität notwendig.

Aufgabe der Erfindung ist es daher ein Verfahren zu schaffen, das eine kostengünstigere Verarbeitung von tiefgefrorenem Mahlgut ermöglicht, sowie eine entsprechende Vorrichtung.

Diese Aufgabe wird erfindungsgemäß durch ein Verfahren mit den Merkmalen des Anspruch 1 und eine Vorrichtung nach Anspruch 9 gelöst.

Das erfindungsgemäße Verfahren ist dadurch gekennzeichnet, dass in einem Aufbereitungsschritt das tiefgefrorene Mahlgut in einen förderfähigen Zustand gebracht wird, dass in einem Förderschritt das aufbereitete Mahlgut zu einem Mahlwerk gefördert wird, insbesondere durch eine Rohrleitung und dass in einem Mahlschritt das aufbereitete Mahlgut in dem Mahlwerk gemahlen wird, wobei das Mahlgut vor dem Mahlschritt auf eine Verarbeitungstemperatur aufgeheizt wird und wobei die Temperatur des Mahlguts permanent unterhalb einer Grenztemperatur gehalten wird.

Dies hat den Vorteil, dass das sonst übliche langwierige Aufwärmen auf eine Raumtemperatur oder über Raumtemperatur entfallen kann, was energetisch günstiger ist und vor allem aber Arbeitszeit einspart.

Das tiefgefrorene Mahlgut kann in einer der bereits beschriebenen Formen vorliegen und kann nach dem Mahlen beispielsweise zur Verarbeitung zu einem Nahrungsergänzungsmittel, zu Getränken, zu Kosmetikprodukten und/oder zu Naturarzneimittel verwendet werden.

Erfindungsgemäß wird das Verfahren innerhalb einer Kühlkette ausgeführt. Dadurch kann ein gefrorener Brei aus tiefgekühltem Mahlgut ohne Auftauen und wieder Einfrieren hergestellt werden, wodurch eine wesentliche Zeit- und Energieersparnis erzielt werden kann.

Erfindungsgemäß ist die Grenztemperatur in der Kühlkette eine maximal zulässige Prozesstemperatur sein. Somit kann erreicht werden, dass das Mahlgut zu keiner Zeit über die Grenztemperatur erwärmt wird.

In einer Ausführung liegt die Grenztemperatur unterhalb einer Pasteurisierungstemperatur, vorzugsweise unter Zimmertemperatur. Dadurch wird verhindert, dass eine Kühlkette unterbrochen wird. Besonders bevorzugt liegt die Grenztemperatur bei einer Kühlkettentemperatur. Somit ist erreichbar, dass eine Kühlkette durch die Verarbeitung nicht unterbrochen wird.

In einer zweckmäßigen Ausführung ist die Verarbeitungstemperatur so gewählt, dass das Mahlgut beim Mahlen, insbesondere durch einen thermischen Eintrag von Scherkräften, einen Phasenübergang vollzieht. Dies kann beispielsweise dadurch erreicht werden, dass die Temperatur des Mahlgutes 0°C durchschreitet. Dadurch kann erreicht werden, dass ein wesentlicher Teil der thermischen Energie, die sich aus den Scherkräften beim Mahlen ergibt, für den Phasenübergang aufgewendet wird und nicht zu einer Erwärmung des Mahlguts führt. Die Temperatur des Mahlguts erhöht sich demnach nur unwesentlich. Auf diese Weise kann ohne zusätzliche Kühlung erreicht werden, dass die Grenztemperatur nicht überschritten wird.

In einer Ausführung kann dies dadurch erreicht werden, dass die Temperatur des Mahlgutes vor Eintritt in den Mahlschritt unter dem Gefrierpunkt und nach Austritt aus dem Mahlschritt etwas über dem Gefrierpunkt aber unterhalb der Grenztemperatur liegt.

Erfindungsgemäß liegt die Verarbeitungstemperatur unterhalb der Grenztemperatur. Auf diese Weise kann sichergestellt werden, dass auch durch den Energieeintrag beim Mahlen die Grenztemperatur nicht überschritten wird.

Erfindungsgemäß beträgt die Grenztemperatur zwischen -4°C und +2°C. Diese Temperatur liegt innerhalb einer Kühlkettentemperatur.

Die Verarbeitungstemperatur beträgt erfindungsgemäß zwischen - 8°C und -4°C.

Die Anlieferungstemperatur des Mahlguts beträgt erfindungsgemäß zwischen -20°C und -18°C.

In einer Ausführung wird in dem Aufbereitungsschritt das Mahlgut zerkleinert und/oder mit anderem Mahlgut vermischt. Das Zerkleinern kann je nach Anlieferungszustand notwendig sein, um das Mahlgut für die nachfolgenden Schritte förderfähig zu machen. Das Zerkleinern kann dabei auf unterschiedliche Weise erfolgen. Insbesondere kann dabei auch bereits eine Mischung von verschiedenen Mahlgutsorten stattfinden. Beispielsweise können auf diese Weise in dem Aufbereitungsschritt tiefgefrorene Erbsen mit tiefgefrorenen Karotten vermischt werden.

Der Aufbereitungsschritt kann auch ein Aufheizen auf die Verarbeitungstemperatur oder eine Zwischentemperatur, die niedriger ist als die Verarbeitungstemperatur, umfassen. Dadurch kann eine bessere Förderfähigkeit erzielt werden.

In einer Ausführung wird in dem Förderschritt das aufbereitete Mahlgut auf einen Arbeitsdruck verdichtet. Dieser Arbeitsdruck ist zum einen zweckmäßig, um das Mahlgut zum Mahlwerk zu fördern, insbesondere durch eine Rohrleitung. Der Druck sorgt jedoch auch für einen kontinuierlichen Nachschub an Mahlgut in dem Mahlwerk, so dass ein Trockenlaufen verhindert werden kann.

In einer Ausführung weist der Förderschritt einen Verdichtungsschritt und einen nachfolgenden Druckerzeugungsschritt auf. Auf diese Weise kann eine gleichmäßige und kontinuierliche Förderung des Mahlguts erzielt werden.

In einer Ausführung wird in dem Verdichtungsschritt ein Teil des verdichteten Mahlguts wieder rückgeführt und mit aufbereitetem Mahlgut erneut dem Verdichtungsschritt zugeführt. Dies wird beispielsweise dadurch erreicht, dass die Förderleistung des Verdichtungsschritts größer ist als die Förderleistung des Druckerzeugerschritts. Beim Übergang von Verdichter zu Druckerzeuger wird somit das überschüssige Mahlgut in den Verdichterschritt rückgeführt. Dies kann auch durch eine mechanische Anordnung unterstützt oder begünstigt werden, beispielsweise durch ein Leitblech oder dergleichen Mittel.

In einer Ausführung findet in dem Druckerzeugungsschritt eine kontinuierliche Förderung des verdichteten Mahlguts statt. Dadurch wird die Regelung der Fördermenge zum Mahlwerk wesentlich vereinfacht. Bei einer pulsierenden Förderung findet eine pulsierende Verdichtung statt, die so stark sein kann, dass gar keine Förderung mehr stattfindet.

Insbesondere vorteilhaft ist es, wenn der Druck einen vorgegebenen Maximaldruck nicht überschreitet. Dadurch wird ein gleichmäßiges Mahlergebnis erzielt.

In einer Ausführung erfolgt in dem Mahlschritt eine Überwachung des Mahlgutstromes, um ein Leerlaufen des Mahlwerks und damit eine Beschädigung zu verhindern. Dadurch kann erkannt werden, wenn zu wenig Mahlgut zum Mahlwerk gelangt. In diesem Fall kann das Mahlwerk geöffnet werden, beispielsweise indem zwei Mahlscheiben auseinander gefahren werden.

Die Erfindung umfasst auch eine Vorrichtung zum Mahlen von tiefgefrorenem Mahlgut gemäß dem Anspruch 9.

Eine solche Vorrichtung ist zum Mahlen von Mahlgut, insbesondere tiefgekühltes Obst und/oder Gemüse, geeignet.

In einer Ausführung ist die Vorrichtung zur Einhaltung einer Kühlkette ausgebildet. Dadurch ist eine kostengünstige und schnelle Verarbeitung möglich, ohne dass das Mahlgut zunächst aufgetaut werden muss und hinterher wieder abgekühlt oder eingefroren werden muss.

Dabei ist die Grenztemperatur in der Kühlkette eine maximal zulässige Prozesstemperatur. Auf diese Weise wird verhindert, dass die Grenztemperatur überschritten wird.

Vorteilhaft ist es, wenn die Grenztemperatur unterhalb einer Pasteurisierungstemperatur, vorzugsweise unter Zimmertemperatur, liegt.

In einer Ausführung ist die Verarbeitungstemperatur so gewählt, dass das Mahlgut beim Mahlen, insbesondere durch einen thermischen Eintrag von Scherkräften, einen Phasenübergang vollzieht und/oder 0°C durchschreitet. Dies hat den Vorteil, dass ein Großteil des thermischen Eintrags, der sich aus der Scherwirkung im Mahlwerk ergibt, durch die Energieaufnahme beim Phasenübergang aufgenommen wird, ohne dass sich die Temperatur des Mahlgutes substantiell erhöht.

In einer Ausführung weist die Vorrichtung eine Verdichtungseinrichtung und eine Druckerzeugungseinrichtung auf. Die Verdichtungseinrichtung ist zum Fördern des aufbereiteten Mahlguts vom Aufbereitungsraum zu der Druckerzeugungseinrichtung ausgebildet. Die Druckerzeugungseinrichtung ist zum Fördern des verdichteten Mahlguts von der Verdichtungseinrichtung unter Druck zum Mahlwerk ausgebildet.

Durch die Trennung der Verdichtung und Druckerzeugung ist eine einfachere und bessere Regelung des Förderstromes möglich. Darüber hinaus ist auch eine bessere Überwachung und Regelung der Verarbeitungstemperatur möglich.

In einer Ausführung weist die Verdichtungseinrichtung eine Rückführung auf, mit der ein Teil des verdichteten Mahlguts in den Aufbereitungsraum zurückgefördert wird. Dadurch wird eine kontinuierliche Bereitstellung von Mahlgut zur Druckerzeugungseinrichtung gewährleistet. Darüber hinaus wird dadurch ein Mischen von verschiedenen Mahlgutsorten unterstützt und eventuell verbessert.

Diese Rückführung kann durch mechanische Komponenten erzielt werden. Außerdem kann die Förderleistung der Verdichtungseinrichtung größer sein, als die Förderleistung der Druckerzeugungseinrichtung.

In einer Ausführung ist die Verdichtungseinrichtung als Schneckenförderer ausgebildet, der in dem Aufbereitungsraum angeordnet ist. Dadurch kann der Schneckenförderer gleichzeitig zur Mischung und Zerkleinerung des Mahlguts in dem Aufbereitungsraum beitragen.

In einer Ausführung der Erfindung ist die Druckerzeugungseinrichtung als Exzenterschneckenpumpe ausgebildet. Dies hat den Vorteil, dass eine kontinuierliche Förderung des verdichteten Mahlguts erfolgt und somit eine genaue und schnelle Regelung der Fördermenge möglich ist.

In einer vorteilhaften Ausführung sind die Verdichtungseinrichtung und die Druckerzeugungseinrichtung konzentrisch angeordnet. Dadurch wird die kontinuierliche Förderung unterstützt.

Insbesondere kann es vorteilhaft sein, wenn der Schneckenförderer und die Exzenterschneckenpumpe durch einen gemeinsamen Antriebsmotor angetrieben sind. Dazu können beispielsweise die beiden Wellen miteinander verbunden sein, insbesondere mittels eines Kreuzgelenks.

In einer Ausführung ist die Heizvorrichtung als Dampfheizung ausgebildet. Dies hat den Vorteil, dass eine schnelle und genaue Regelung der Temperatur möglich ist.

In einer Ausführung weist die Vorrichtung mehrere, insbesondere drei, Heizkreisläufe auf. Auf diese Weise kann eine Verarbeitungstemperatur gleichmäßig über die gesamte Vorrichtung erreicht werden.

Insbesondere ist es zweckmäßig, wenn ein Heizkreislauf in dem Aufbereitungsraum und ein Heizkreislauf in der Druckerzeugungseinrichtung angeordnet sind.

Für die Förderung zwischen der Druckerzeugungseinrichtung und dem Mahlwerk ist es wichtig, dass die Temperatur des Mahlgutes und insbesondere die Temperatur an der Wandung der Förderleitung nicht zu tief fallen. Denn dies hätte den Nachteil, dass Bestandteile des Mahlgutes an der Wandlung festfrieren können, was zu Verstopfungen führen kann. Eine vorteilhafte Ausführung weist daher einen Heizkreislauf zwischen Druckerzeugungseinrichtung und Mahlwerk auf. Dieser kann insbesondere an einer Rohrleitung oder Förderleitung angeordnet sein.

Für eine schnelle und genaue Regelung der Mahlguttemperatur kann es vorteilhaft sein, wenn die Heizvorrichtung eine Temperaturregelung aufweist, wobei die Temperatur des Mahlguts und/oder die Rückführtemperatur des Dampfes als Regelgröße verwendet werden. Dadurch kann eine Einhaltung der Grenztemperatur erreicht werden.

Das Mahlwerk kann als Scheibenmahlwerk ausgebildet sein, das insbesondere mit einer negativen Spalteinstellung vorgespannt ist.

Die Erfindung ist nachfolgend anhand von Ausführungsbeispielen mit Bezug auf die beiliegenden Zeichnungen näher erläutert.

Es zeigt:
- Fig. 1:: ein Blockdiagramm einer erfindungsgemäßen Vorrichtung,
- Fig. 2:: ein Ablaufdiagramm eines erfindungsgemäßen Verfahrens,
- Fig. 3:: eine Schrägansicht einer beispielhaften erfindungsgemäßen Vorrichtung und
- Fig. 4:: eine Schnittansicht eines Aufbereitungsraumes mit einer Verdichtungseinrichtung und einer Druckerzeugungseinrichtung.

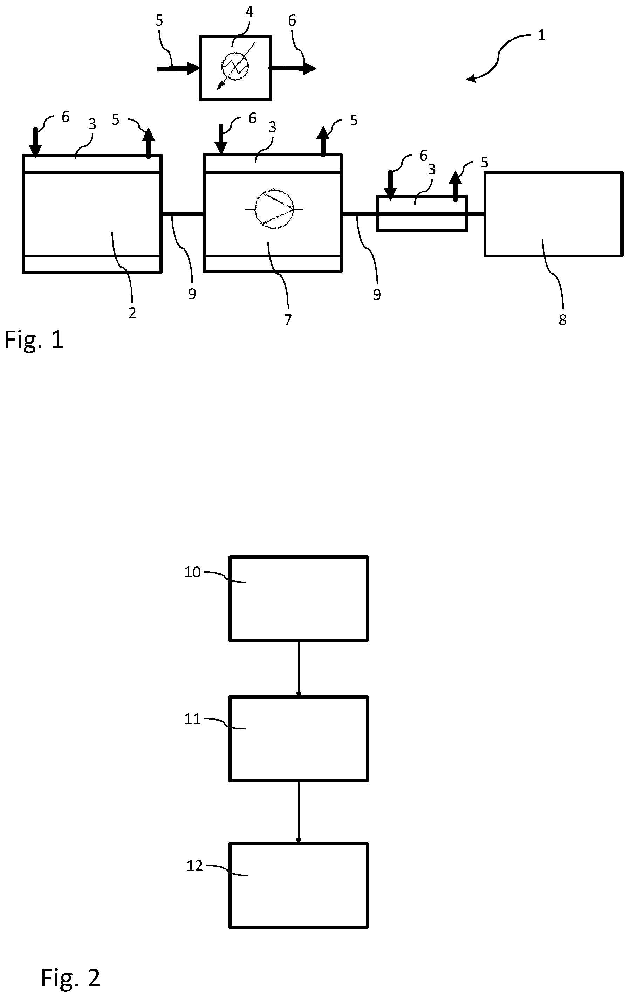

Die Fig. 1 zeigt eine schematische Blockdarstellung einer erfindungsgemäßen Vorrichtung 1 zum Mahlen von tiefgefrorenem Mahlgut.

Die Vorrichtung 1 weist einen Aufbereitungsraum 2 auf. Der Aufbereitungsraum 2 besitzt eine Einfüllöffnung, durch die das tiefgefrorene Mahlgut einfüllbar ist. Das Mahlgut hat in der Regel eine Anlieferungstemperatur um die -20°C bis -18°C. Das Mahlgut kann dabei als Block, als sogenanntes IQF-Produkt in Einzelportionen oder als Einzelteile vorliegen. Insbesondere bei Blöcken kann eine vorherige Zerkleinerung stattfinden, beispielsweise durch Häckseln, Sägen oder Brechen.

In der gezeigten beispielhaften Ausführung weist der Aufbereitungsraum 2 einen Heizkreislauf 3 auf, durch den heißer Dampf einer Dampfheizung 4 durchleitbar ist. Der Heizkreislauf 3 besitzt einen Zulauf 5 und einen Rücklauf **6,** die mit dem Vorlauf 5 beziehungsweise dem Rücklauf 6 der Dampfheizung 4 verbunden sind. Der Heizkreislauf 3 ist am oder im Aufbereitungsraum 2 angeordnet. Der Heizkreislauf 3 weist eine Regelung auf, durch die die Dampfmenge und somit die Temperatur im Aufbereitungsraum 2 regelbar ist.

Als Regelgröße kann hierbei die Temperatur des Mahlguts innerhalb des Aufbereitungsraumes 2 dienen. Es kann jedoch auch die Dampftemperatur in der Dampfrückleitung 6 gemessen werden. Aus der Differenz zwischen der Dampf-Vorlauftemperatur und der Dampf-Rücklauftemperatur kann ebenfalls auf die Mahlguttemperatur geschlossen werden. Insbesondere werden beide Temperaturwerte zur Regelung der Dampfmenge verwendet.

Dadurch kann das Mahlgut genau auf eine Verarbeitungstemperatur erwärmt werden, um es beispielsweise förderfähig zu machen. Dabei ist jedoch zu beachten, dass die Verarbeitungstemperatur unterhalb einer Grenztemperatur und insbesondere unterhalb des Gefrierpunkts von Wasser liegt.

Diese Verarbeitungstemperatur kann hierbei unveränderlich festgelegt oder variierbar sein. Es kann auch eine Schwankung der Verarbeitungstemperatur innerhalb eines vorgegebenen Bereichs zugelassen sein.

Die Verarbeitungstemperatur liegt beispielsweise zwischen -8°C und -6°C während die Grenztemperatur beispielsweise zwischen - 4°C und +2°C liegt.

An den Aufbereitungsraum 2 schließt eine Druckerzeugungseinrichtung 7 an, die das förderfähige Mahlgut zu einem Mahlwerk 8 fördert. Die Druckerzeugungseinrichtung 7 kann beispielsweise eine Pumpe sein. Die Druckerzeugungseinrichtung 7 kann beispielsweise wie abgebildet über eine kurze Rohrleitung 9 verbunden sein. Die Druckerzeugungseinrichtung 7 kann jedoch auch direkt, beispielsweise über eine Flanschverbindung, mit dem Aufbereitungsraum 2 verbunden sein.

Auch die Druckerzeugungseinrichtung 7 besitzt einen Heizkreislauf 3 der Dampfheizung 4. Dadurch wird ein Abkühlen des Mahlguts verhindert und die Verarbeitungstemperatur konstant gehalten oder das Aufwärmen des Mahlguts erfolgt abschnittsweise im Aufbereitungsraum 2 und der Druckerzeugungseinrichtung 7 gemeinsam. Entscheidend ist, dass das Mahlgut am Ausgang der Druckerzeugungseinrichtung 7 die gewünschte Verarbeitungstemperatur besitzt. Der Heizkreislauf 3 der Druckerzeugungseinrichtung 7 weist eine separate Temperaturregelung auf.

Zwischen der Druckerzeugungseinrichtung 7 und dem Mahlwerk 8 ist eine Förderleitung 9 angeordnet. Die Förderleitung 9 kann beispielsweise eine Rohrleitung sein. Diese Rohrleitung 9 kann auch längere Strecken überbrücken. Dabei ist zu beachten, dass es bei Rohrleitungen 9, die länger als etwa 50 cm sind, zu einem Abkühlen und Festfrieren des Mahlguts kommen kann. Aus diesem Grund weist im Beispiel die Rohrleitung 9 ebenfalls einen Heizkreislauf 3 auf, der über die Dampfheizung 4 versorgt wird. Damit kann auch in der Rohrleitung 9 die Verarbeitungstemperatur eingehalten werden, so dass das Mahlgut bei Eintritt in das Mahlwerk 8 die gewünschte Verarbeitungstemperatur besitzt.

Bei anderen Ausführungsbeispielen ist der Heizkreislauf 3 so dimensioniert, dass auch längere Rohleitungen 9, beispielsweise von 60 cm oder mehr als 60 cm, verwendbar sind.

Das Mahlgut besitzt bei Eintritt in das Mahlwerk 8 demnach die Verarbeitungstemperatur. Durch das Mahlen selbst wird Bewegungsenergie in das Mahlgut eingebracht, wodurch sich das Mahlgut weiter erwärmt. Die Verarbeitungstemperatur ist dabei jedoch so gewählt, dass im Mahlwerk 8 das Mahlgut einen Phasenübergang von Fest nach Flüssig durchschreitet und die meiste kinetische Energie für diesen Phasenübergang aufgewendet wird. Dadurch steigt die Temperatur des Mahlguts nur minimal, weshalb im Mahlwerk keine Kühlung vorgesehen sein muss. Die Temperatur des Mahlguts bleibt dadurch unterhalb der Grenztemperatur. Auf diese Weise kann innerhalb des gesamten Mahlprozesses eine Kühlkette eingehalten werden.

Die Fig. 2 zeigt ein Ablaufdiagramm eines erfindungsgemäßen Verfahrens. In einem Aufbereitungsschritt 10 wird das tiefgefrorene Mahlgut in einen förderfähigen Zustand gebracht. Dies kann beispielsweise das Aufheizen auf eine Verarbeitungstemperatur, das Mischen mit anderen Mahlgutsorten und/oder das Zerkleinern des Mahlguts umfassen.

In einem anschließenden Förderschritt 11 wird das aufbereitete Mahlgut zu einem Mahlwerk gefördert. Dies kann insbesondere durch eine Rohrleitung erfolgen.

Der Förderschritt 11 kann in zwei Unterschritte, einen Verdichtungsschritt und einen Druckerzeugungsschritt, aufgeteilt sein. Der Verdichtungsschritt sorgt dabei für eine kontinuierliche Mahlgutversorgung eines Druckerzeugers, beispielsweise eine Pumpe. Somit wird sichergestellt, dass der Druckerzeuger nicht leer läuft.

Der Druckerzeugungsschritt sorgt dann für eine kontinuierliche Förderung von Mahlgut zum Mahlwerk. Dabei ist der Druck notwendig, um das Mahlwerk zu schützen. Insbesondere bei einem Scheibenmahlwerk ist es notwendig, dass durch das Mahlgut die beiden Mahlscheiben auf Abstand gehalten oder gedrückt werden, um eine Zerstörung der Mahlscheiben zu verhindern. Die Druckerzeugungseinrichtung stellt diesen Druck ein.

In einem Mahlschritt 12 wird das aufbereitete Mahlgut in dem Mahlwerk gemahlen.

Prinzipiell wird das Mahlgut vor dem Mahlschritt 12 auf eine Verarbeitungstemperatur aufgeheizt. Dies kann während dem Aufbereitungsschritt 10 und/oder während dem Förderschritt 11 erfolgen. Die Temperatur des Mahlguts wird dabei jedoch permanent unterhalb einer Grenztemperatur gehalten.

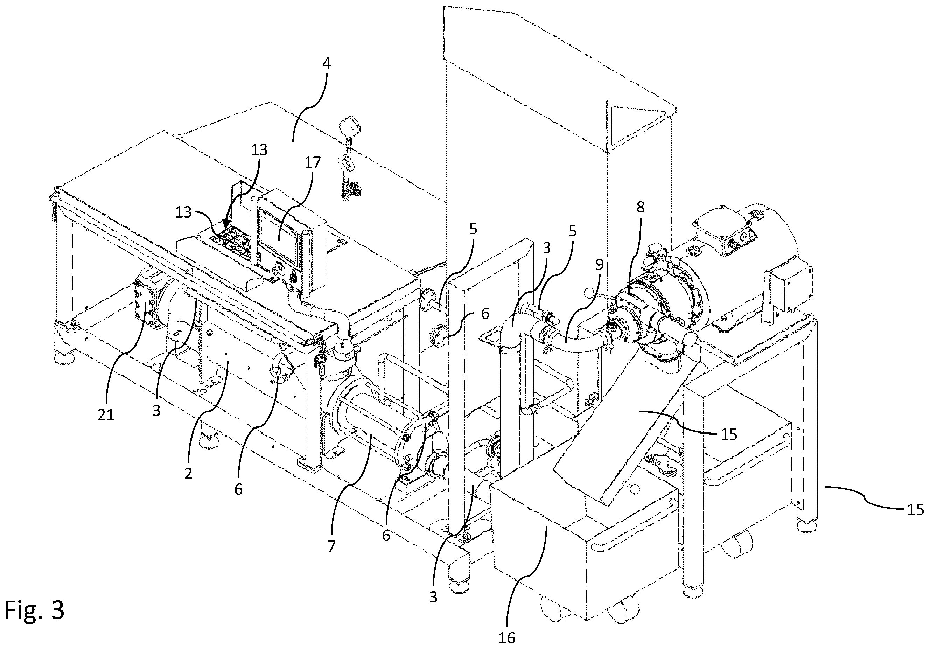

Die Fig. 3 zeigt ein Ausführungsbeispiel einer erfindungsgemäßen Vorrichtung. Die Vorrichtung weist einen Aufbereitungsraum 2, eine Druckerzeugungseinrichtung 7 und ein Mahlwerk 8, das über eine Rohrleitung 9 mit der Druckerzeugungseinrichtung 7 verbunden ist.

Der Aufbereitungsraum 2 weist eine Einfüllöffnung 13 auf, durch die das Mahlgut, beispielsweise tiefgefrorenes Obst und/oder Gemüse, einfüllbar sind. Neben Obst und Gemüse können auch andere tiefgefrorene Lebensmittel verarbeitet werden, beispielsweise Fleisch oder Fisch. Die Einfüllöffnung 13 ist durch ein Gitter 14 oder Sieb abgedeckt, um zu verhindern, dass zu große Stücke in den Aufbereitungsraum 2 eingefüllt werden.

An den Aufbereitungsraum 2 ist im Beispiel eine Druckerzeugungseinrichtung 7 angeflanscht. Von der Druckerzeugungseinrichtung 7 führt eine Rohrleitung 9 zum Mahlwerk 8. Das Mahlwerk 8 ist im Beispiel ein Scheibenmahlwerk. Es kann jedoch auch ein anderes Mahlprinzip zur Anwendung kommen.

Am Mahlwerk 8 ist eine Auslassrampe 15 angeordnet, durch die das fertig gemahlene Mahlgut von dem Mahlwerk 8 in einen Auffangbehälter 16 rutscht.

Die Vorrichtung 1 weist eine Dampfheizung 4 auf, in der heißer Dampf erzeugt wird. Dieser Dampf führt über einen Vorlauf 5 und Rücklauf 6 zu Heizkreisläufen 3 am Aufbereitungsraum 2, an der Druckerzeugungseinrichtung 8 und an der Rohrleitung 8.

Die Vorrichtung 1 besitzt eine Bedienkonsole 17, über die alle Vorgänge und Prozessparameter steuerbar sind.

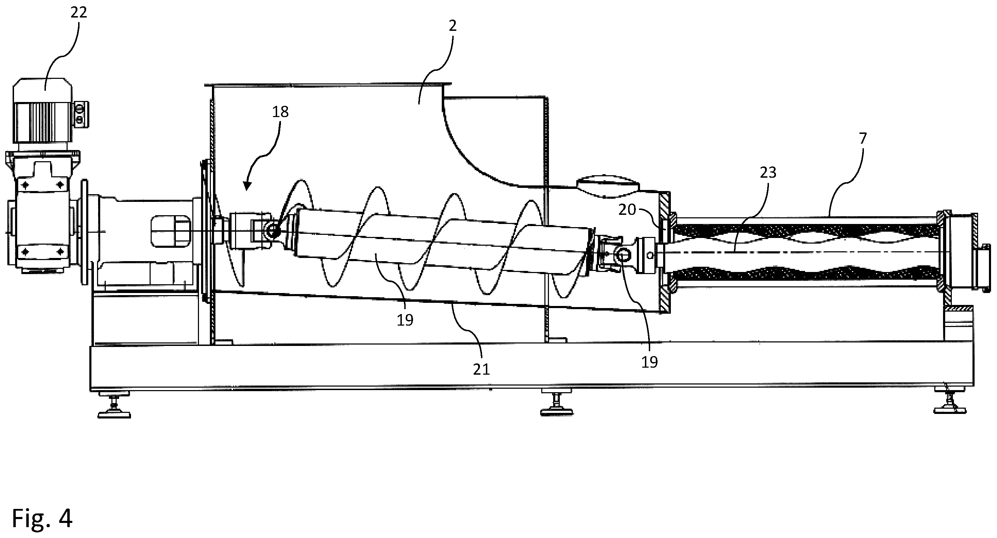

Die Fig. 4 zeigt eine Schnittansicht des Aufbereitungsraumes 2 und der Druckerzeugungseinrichtung 7 der Vorrichtung der Fig. 3.

In diesem Beispiel ist in dem Aufbereitungsraum 2 ein Schneckenförderer 18 mit einer Förderschnecke 19 angeordnet. Der Schneckenförderer 18 sorgt für eine gute Durchmischung des Mahlguts und für eine Verdichtung des Mahlguts zur Druckerzeugungseinrichtung 7 hin. Die Förderschnecke 19 endet im Flanschdurchgang 20 zur Druckerzeugungseinrichtung 7. Das bedeutet, das Mahlgut wird von der Förderschnecke 19 zum Flanschdurchgang 20 hin gefördert. Der Aufbereitungsraum 2, oder zumindest der Boden 21, fällt im Beispiel zum Flanschdurchgang 21 hin ab. Die Förderschnecke ist parallel zum Boden 21 angeordnet und im Beispiel daher ebenfalls leicht abfallend angeordnet.

Der Flanschdurchgang 20 kann nun so bemessen sein, dass ein Teil des angeförderten Mahlguts nicht hindurchbefördert wird, sondern durch die Wandung in den Aufbereitungsraum 2 zurückströmt. Dies kann auch dadurch erreicht werden, dass die Fördermenge des Schneckenförderers 18 größer ist als die Fördermenge der Pumpe 7. Hierdurch wird eine homogene Mischung und vor allem ein luft- und blasenfreier Mahlgutstrom zur Druckerzeugungseinrichtung 7 gewährleistet.

Die Druckerzeugungseinrichtung 7 ist im Beispiel als Exzenterschneckenpumpe ausgebildet. Diese hat den Vorteil, dass ein kontinuierlicher Förderstrom am Ausgang ansteht und keine periodischen Druckschwankungen auftreten. Dies ist insbesondere bei einem negativ vorgespannten Scheibenmahlwerk vorteilhaft. Ein kontinuierlicher Förderstrom ermöglicht auch eine genauere Regelung der Fördermenge.

Die Förderschnecke 19 ist von einem elektrischen Antriebsmotor 22 angetrieben. Die Exzenterschneckenwelle 23 der Pumpe 7 ist über ein Kreuzgelenk 24 mit der Förderschnecke 19 verbunden und somit über denselben Antriebsmotor 22 angetrieben.

### Bezugszeichenliste

- 1: Vorrichtung zum Mahlen
- 2: Aufbereitungsraum
- 3: Heizkreislauf
- 4: Heizvorrichtung/Dampfheizung
- 5: Vorlauf
- 6: Rücklauf
- 7: Druckerzeugungseinrichtung
- 8: Mahlwerk
- 9: Rohrleitung
- 10: Aufbereitungsschritt
- 11: Förderschritt
- 12: Mahlschritt
- 13: Einfüllöffnung
- 14: Gitter
- 15: Rampe
- 16: Auffangbehälter
- 17: Bedienkonsole
- 18: Verdichtungseinrichtung/Schneckenförderer
- 19: Förderschnecke
- 20: Flanschdurchgang
- 21: Boden des Aufbereitungsraumes
- 22: Antriebsmotor Pumpe
- 23: Exzenterschneckenwelle
- 24: Kreuzgelenk
- 25: Antriebsmotor Mahlwerk

## Patentansprüche

1. Verfahren zum Mahlen von tiefgefrorenem Mahlgut, **dadurch gekennzeichnet, dass** das Verfahren innerhalb einer Kühlkette ausgeführt wird, dass in einem Aufbereitungsschritt (10) das tiefgefrorene Mahlgut in einen förderfähigen Zustand gebracht wird, dass in einem Förderschritt (11) das aufbereitete Mahlgut zu einem Mahlwerk gefördert wird, insbesondere durch eine Rohrleitung, dass in einem Mahlschritt (12) das aufbereitete Mahlgut in dem Mahlwerk gemahlen wird, wobei das Mahlgut vor dem Mahlschritt (12) auf eine Verarbeitungstemperatur aufgeheizt wird und wobei die Temperatur des Mahlguts permanent unterhalb einer Grenztemperatur gehalten wird, wobei die Grenztemperatur eine in der Kühlkette maximal zulässige Prozesstemperatur ist, dass die Verarbeitungstemperatur unterhalb der Grenztemperatur liegt, wobei die Grenztemperatur zwischen -4°C und +2°C beträgt, wobei die Verarbeitungstemperatur zwischen -8°C und -4°C beträgt und wobei die Anlieferungstemperatur des Mahlguts zwischen -20°C und - 18°C beträgt.

2. Verfahren nach Anspruch 1, **dadurch gekennzeichnet, dass** die Grenztemperatur unterhalb einer Pasteurisierungstemperatur, vorzugsweise unter Zimmertemperatur, besonders bevorzugt bei einer Kühlkettentemperatur, liegt.

3. Verfahren nach einem der vorhergehenden Ansprüche,
**dadurch gekennzeichnet, dass** die Verarbeitungstemperatur so gewählt ist, dass das Mahlgut beim Mahlen, insbesondere durch einen thermischen Eintrag von Scherkräften, einen Phasenübergang vollzieht und/oder 0°C durchschreitet.

4. Verfahren nach einem der vorhergehenden Ansprüche,
**dadurch gekennzeichnet, dass** in dem Aufbereitungsschritt (10) das Mahlgut zerkleinert und/oder mit anderem Mahlgut vermischt wird und/oder dass in dem Förderschritt (11) das aufbereitete Mahlgut auf einen Arbeitsdruck verdichtet wird.

5. Verfahren nach einem der vorhergehenden Ansprüche,
**dadurch gekennzeichnet, dass** der Förderschritt (11) einen Verdichtungsschritt und einen nachfolgenden Druckerzeugungsschritt aufweist.

6. Verfahren nach Anspruch 5, **dadurch gekennzeichnet, dass** in dem Verdichtungsschritt ein Teil des verdichteten Mahlguts wieder rückgeführt und mit aufbereitetem Mahlgut erneut dem Verdichtungsschritt zugeführt wird.

7. Verfahren nach Anspruch 5 oder 6, **dadurch gekennzeichnet, dass** in dem Druckerzeugungsschritt eine kontinuierliche Förderung des verdichteten Mahlguts stattfindet, insbesondere wobei der Druck einen vorgegebenen Maximaldruck nicht überschreitet.

8. Verfahren nach einem der vorhergehenden Ansprüche,
**dadurch gekennzeichnet, dass** in dem Mahlschritt (12) eine Überwachung des Mahlgutstromes erfolgt, um ein Leerlaufen des Mahlwerks zu verhindern.

9. Vorrichtung (1) zum Mahlen von tiefgefrorenem Mahlgut mit einem Aufbereitungsraum (2), zum Aufbereiten des tiefgefrorenen Mahlguts in einen förderfähigen Zustand, mit einer Fördereinrichtung (7) zur Förderung des Mahlguts, einem Mahlwerk (8), und mit einer Heizvorrichtung (3), mit der das Mahlgut auf eine Verarbeitungstemperatur aufheizbar ist, wobei die Verarbeitungstemperatur höher als eine Anlieferungstemperatur des tiefgefrorenen Mahlguts liegt, wobei die Temperatur des Mahlguts jederzeit unterhalb einer Grenztemperatur liegt, wobei die Grenztemperatur eine in einer Kühlkette maximal zulässige Prozesstemperatur ist, wobei die Verarbeitungstemperatur unterhalb der Grenztemperatur liegt, wobei die Grenztemperatur zwischen -4°C und +2°C beträgt, wobei die Verarbeitungstemperatur zwischen -8°C und -4°C beträgt und wobei die Anlieferungstemperatur des Mahlguts zwischen -20°C und -18°C beträgt.

10. Vorrichtung (1) nach Anspruch 9, **dadurch gekennzeichnet, dass** die Vorrichtung zur Einhaltung einer Kühlkette ausgebildet ist, insbesondere wobei die Grenztemperatur in der Kühlkette eine maximal zulässige Prozesstemperatur ist, und/oder dass die Grenztemperatur unterhalb einer Pasteurisierungstemperatur, vorzugsweise unter Zimmertemperatur, liegt.

11. Vorrichtung (1) nach einem der Ansprüche 9 oder 10,
**dadurch gekennzeichnet, dass** die Verarbeitungstemperatur so gewählt ist, dass das Mahlgut beim Mahlen, insbesondere durch einen thermischen Eintrag von Scherkräften, einen Phasenübergang vollzieht und/oder 0°C durchschreitet

12. Vorrichtung (1) nach einem der Ansprüche 9 bis 11,
**dadurch gekennzeichnet, dass** die Vorrichtung eine Verdichtungseinrichtung (18) und eine Druckerzeugungseinrichtung (7) aufweist, wobei die Verdichtungseinrichtung (18) zum Fördern des aufbereiteten Mahlguts vom Aufbereitungsraum (2) zu der Druckerzeugungseinrichtung (7) ausgebildet ist, und die Druckerzeugungseinrichtung (7) zum Fördern des verdichteten Mahlguts von der Verdichtungseinrichtung (18) unter Druck zum Mahlwerk (8) ausgebildet ist.

13. Vorrichtung (1) nach einem der Ansprüche 9 bis 12, **dadurch gekennzeichnet, dass** die Verdichtungseinrichtung (18) eine Rückführung aufweist, mit der ein Teil des verdichteten Mahlguts in den Aufbereitungsraum (2) zurückgefördert wird.

14. Vorrichtung (1) nach einem der Ansprüche 9 bis 13,
**dadurch gekennzeichnet, dass** die Verdichtungseinrichtung als Schneckenförderer (18) mit einer Förderschnecke (19) ausgebildet ist, der im Aufbereitungsraum (2) angeordnet ist und/oder dass die Druckerzeugungseinrichtung (2) als Exzenterschneckenpumpe ausgebildet ist, insbesondere wobei die Verdichtungseinrichtung (18) und die Druckerzeugungseinrichtung (7) konzentrisch angeordnet sind.

15. Vorrichtung (1) nach einem der Ansprüche 9 bis 14,
**dadurch gekennzeichnet, dass** die Heizvorrichtung als Dampfheizung (4) ausgebildet ist und/oder dass die Vorrichtung (1) mehrere, insbesondere drei, Heizkreisläufe (3) aufweist, insbesondere wobei ein Heizkreislauf (3) in dem Aufbereitungsraum (2), ein Heizkreislauf (3) in der Druckerzeugungseinrichtung (7) und ein Heizkreislauf (3) zwischen Druckerzeugungseinrichtung (7) und Mahlwerk (8), insbesondere an einer Rohrleitung (9) angeordnet ist und/oder dass die Heizvorrichtung (4) eine Temperaturregelung aufweist, wobei die Temperatur des Mahlguts und/oder die Rückführtemperatur des Dampfes als Regelgröße verwendet wird und/oder dass das Mahlwerk (8) mit einer negativen Spalteinstellung vorgespannt ist.

## Claims

1. Method for grinding deep-frozen material to be ground, **characterized in that** the method is carried out within a cold chain, **in that** in a preparation step (10) the deep-frozen material to be ground is brought into a conveyable state, **in that** in a conveying step (11) the prepared material to be ground is conveyed to a grinding mill, in particular through a pipe, **in that** in a grinding step (12) the prepared material to be ground is ground in the grinding mill, wherein the material to be ground is heated to a processing temperature prior to the grinding step (12) and wherein the temperature of the material to be ground is kept permanently below a limit temperature, wherein the limit temperature is a maximum permissible process temperature in the cooling chain, **in that** the processing temperature is below the limit temperature, wherein the limit temperature is between -4°C and +2°C, wherein the processing temperature is between -8°C and -4°C, and wherein the delivery temperature of the material to be ground is between -20°C and -18°C.

2. Method according to claim 1, **characterized in that** the limit temperature is below a pasteurization temperature, preferably below room temperature, particularly preferably at a cold chain temperature.

3. Method according to one of the preceding claims, **characterized in that** the processing temperature is selected such that the material to be ground undergoes a phase transition and/or passes through 0°C during grinding, in particular through the thermal application of shear forces.

4. Method according to one of the preceding claims, **characterized in that** in the preparation step (10) the material to be ground is comminuted and/or mixed with other material to be ground and/or **in that** in the conveying step (11) the prepared material to be ground is compressed to a working pressure.

5. Method according to one of the preceding claims, **characterized in that** the conveying step (11) comprises a compression step and a subsequent pressure generation step.

6. Method according to claim 5, **characterized in that** in the compression step, a portion of the compressed material to be ground is returned and fed back to the compression step together with prepared material to be ground.

7. Method according to claim 5 or 6, **characterized in that** in the pressure generation step, continuous conveying of the compressed material to be ground takes place, in particular wherein the pressure does not exceed a predetermined maximum pressure.

8. Method according to one of the preceding claims, **characterized in that** in the grinding step (12), the flow of material to be ground is monitored in order to prevent the grinding mechanism from running empty.

9. Device (1) for grinding deep-frozen material to be ground according to the method of claims 1-8, having a preparation chamber (2) for preparing the deep-frozen material to be ground into a conveyable state, having a conveying device (7) for conveying the material to be ground, a grinding mechanism (8), and having a heating device (3) with which the material to be ground can be heated to a processing temperature, wherein the processing temperature is higher than a delivery temperature of the deep-frozen material to be ground, wherein the temperature of the material to be ground is at all times below a limit temperature, wherein the limit temperature is a maximum permissible process temperature in a cold chain, wherein the processing temperature is below the limit temperature, wherein the limit temperature is between -4°C and +2°C, wherein the processing temperature is between -8°C and -4°C, and wherein the delivery temperature of the material to be ground is between - 20°C and -18°C.

10. Device (1) according to claim 9, **characterized in that** the device is designed to maintain a cold chain, in particular wherein the limit temperature in the cold chain is a maximum permissible process temperature, and/or **in that** the limit temperature is below a pasteurization temperature, preferably below room temperature.

11. Device (1) according to one of claims 9 or 10, **characterized in that** the processing temperature is selected such that the material to be ground undergoes a phase transition and/or passes through 0°C during grinding, in particular due to the thermal input of shear forces.

12. Device (1) according to one of claims 9 to 11, **characterized in that** the device has a compression device (18) and a pressure generating device (7), wherein the compression device (18) is designed to convey the prepared material to be ground from the preparation chamber (2) to the pressure generating device (7), and the pressure generating device (7) is designed to convey the compressed material to be ground from the compression device (18) under pressure to the grinding mechanism (8).

13. Device (1) according to one of claims 9 to 12, **characterized in that** the compression device (18) has a return line by means of which a portion of the compressed material is returned to the preparation chamber (2).

14. Device (1) according to one of claims 9 to 13, **characterized in that** the compression device is designed as a screw conveyor (18) with a conveyor screw (19) which is arranged in the preparation chamber (2) and/or **in that** the pressure generating device (7) is designed as an eccentric screw pump, in particular wherein the compression device (18) and the pressure generating device (7) are arranged concentrically.

15. Device (1) according to one of claims 9 to 14, **characterized in that** the heating device is designed as a steam heater (4) and/or **in that** the device (1) has multiple, in particular three, heating circuits (3), in particular wherein one heating circuit (3) is located in the preparation chamber (2), one heating circuit (3) is arranged in the pressure generating device (7) and one heating circuit (3) is arranged between the pressure generating device (7) and the grinding mechanism (8), in particular on a pipe (9), and/or **in that** the heating device (4) has a temperature control system, wherein the temperature of the material to be ground and/or the return temperature of the steam is used as the controlled variable and/or **in that** the grinding mechanism (8) is pretensioned with a negative gap setting.

## Revendications

1. Procédé de broyage d'une matière à broyer congelée, **caractérisé en ce que** le procédé est réalisé à l'intérieur d'une chaîne de froid, **en ce que**, dans une étape de préparation (10), la matière à broyer congelée est amenée dans un état transportable, **en ce que**, dans une étape de transport (11), la matière à broyer préparée est transportée vers un broyeur, en particulier par une conduite, **en ce que**, dans une étape de broyage (12), la matière à broyer préparée est broyée dans le broyeur, la matière à broyer étant chauffée à une température de traitement avant l'étape de broyage (12) et la température de la matière à broyer étant maintenue en permanence en dessous d'une température limite, la température limite étant une température de processus maximale autorisée dans la chaîne de froid, **en ce que** la température de traitement est inférieure à la température limite, la température limite étant comprise entre -4°C et +2°C, la température de traitement étant comprise entre -8°C et -4°C et la température d'arrivée de la matière à broyer étant comprise entre -20°C et -18°C.

2. Procédé selon la revendication 1, **caractérisé en ce que** la température limite est inférieure à une température de pasteurisation, de préférence inférieure à la température ambiante, de manière particulièrement préférée à une température de chaîne du froid.

3. Procédé selon l'une des revendications précédentes, **caractérisé en ce que** la température de traitement est choisie de telle sorte que la matière à broyer subisse une transition de phase lors du broyage, notamment par un apport thermique de forces de cisaillement, et/ou passe par 0°C.

4. Procédé selon l'une des revendications précédentes, **caractérisé en ce que**, dans l'étape de préparation (10), la matière à broyer est broyée et/ou mélangée à une autre matière à broyer et/ou **en ce que**, dans l'étape de transport (11), la matière à broyer préparée est comprimée à une pression de travail.

5. Procédé selon l'une des revendications précédentes, **caractérisé en ce que** l'étape de transport (11) comprend une étape de compression suivie d'une étape de génération de pression.

6. Procédé selon la revendication 5, **caractérisé en ce que**, dans l'étape de compression, une partie de la matière à broyer compressée est recyclée et ramenée à l'étape de compression avec une matière à broyer préparée.

7. Procédé selon la revendication 5 ou 6, **caractérisé en ce que**, dans l'étape de génération de pression, un transport continu de matière à broyer compressée a lieu, en particulier dans lequel la pression ne dépasse pas une pression maximale prédéterminée.

8. Procédé selon l'une des revendications précédentes, **caractérisé en ce que**, lors de l'étape de broyage (12), une surveillance du flux de matière à broyer est effectuée afin d'éviter que le broyeur ne tourne à vide.

9. Dispositif (1) de broyage de matière à broyer congelée selon le procédé des revendications 1 à 8, avec un espace de préparation (2), pour la préparation de la matière à broyer congelée dans un état transportable, avec un dispositif de transport (7) pour le transport de la matière à broyer, un broyeur (8), et avec un dispositif de chauffage (3), avec lequel la matière à broyer est chauffable à une température de traitement, la température de traitement étant supérieure à une température d'arrivée de la matière à broyer congelée, la température de la matière à broyer étant à tout moment inférieure à une température limite, la température limite étant une température de processus maximale autorisée dans une chaîne de froid, la température de traitement étant inférieure à la température limite, la température limite étant comprise entre -4°C et +2°C, la température de traitement étant comprise entre -8°C et -4°C, et la température d'arrivée de la matière à broyer étant comprise entre -20°C et -18°C.

10. Dispositif (1) selon la revendication 9, **caractérisé en ce que** le dispositif est conçu pour respecter une chaîne de froid, en particulier dans lequel la température limite dans la chaîne de froid est une température de processus maximale autorisée, et/ou **en ce que** la température limite est inférieure à une température de pasteurisation, de préférence inférieure à la température ambiante.

11. Dispositif (1) selon l'une des revendications 9 ou 10, **caractérisé en ce que** la température de traitement est choisie de telle sorte que la matière à broyer subisse une transition de phase lors du broyage, notamment par un apport thermique de forces de cisaillement, et/ou passe par 0°C.

12. Dispositif (1) selon l'une des revendications 9 à 11, **caractérisé en ce que** le dispositif comporte un dispositif de compression (18) et un dispositif de génération de pression (7), le dispositif de compression (18) étant conçu pour transporter la matière à broyer préparée depuis l'espace de préparation (2) jusqu'au dispositif de génération de pression (7), et le dispositif de génération de pression (7) étant conçu pour transporter la matière à broyer compressée depuis le dispositif de compression (18) sous pression jusqu'au broyeur (8).

13. Dispositif (1) selon l'une des revendications 9 à 12, **caractérisé en ce que** le dispositif de compression (18) comporte un dispositif de recyclage permettant de ramener une partie de la matière à broyer compressée dans l'espace de préparation (2).

14. Dispositif (1) selon l'une des revendications 9 à 13, **caractérisé en ce que** le dispositif de compression est réalisé sous la forme d'un convoyeur à vis (18) avec une vis sans fin (19), qui est disposé dans l'espace de préparation (2) et/ou **en ce que** le dispositif de génération de pression (2) est réalisé sous la forme d'une pompe à vis excentrée, en particulier dans lequel le dispositif de compression (18) et le dispositif de génération de pression (7) sont disposés de manière concentrique.

15. Dispositif (1) selon l'une des revendications 9 à 14, **caractérisé en ce que** le dispositif de chauffage est conçu comme un chauffage à vapeur (4) et/ou **en ce que** le dispositif (1) présente plusieurs, en particulier trois, circuits de chauffage (3), en particulier un circuit de chauffage (3) dans l'espace de préparation (2), un circuit de chauffage (3) dans le dispositif de génération de pression (7) et un circuit de chauffage (3) entre le dispositif de génération de pression (7) et le broyeur (8), notamment disposé sur une conduite (9) et/ou **en ce que** le dispositif de chauffage (4) présente une régulation de température, la température de la matière à broyer et/ou la température de recyclage de la vapeur étant utilisées comme grandeur de régulation et/ou **en ce que** le mécanisme de broyage (8) est précontraint avec un réglage d'écartement négatif.
